# EUROPEAN PATENT SPECIFICATION

(11) **EP 1 285 584 B1**
(45) Date of publication and mention of the grant of the patent: **25.11.2009**
(21) Application number: 02255760.7
(22) Date of filing: 19.08.2002
(51) Int. Cl.: A23D 7/05, A23D 9/04

(54) **Cryogenic crystallisation of fats**
Verfahren zum kryogenen Kristallisieren von Fetten
Procédé et pour la cristallisation cryogénique de graisses

(30) Priority: 23.08.2001 GB 0120552
(43) Date of publication of application: 26.02.2003
(73) Proprietor: The BOC Group Limited, The Surrey Research Park Guildford Surrey GU2 7XY (GB)
(72) Inventor: Brooker, Brian Edward, Sonning, Berkshire RG4 6UR (GB); Tomlins, Richard Ivor Dr., Henley on Thames, Oxon RG9 6DE (GB)
(74) Representative: Wickham, Michael

(56) References cited:
- EP-A- 0 393 963
- WO-A-00/09636
- WO-A-98/13133
- US-A- 4 889 740
- US-A- 6 165 518

## Description

This invention relates to a method of producing a food product formulation having plasticity or firmness, comprising or containing a uniform dispersion of crystalline solid fat in an oil phase.

Edible fats and oils consist predominantly of triglycerides. Typically, fats are mixtures of triglycerides, some of which have a melting point higher than room or ambient temperature and therefore contain solids in the form of fat crystals, whereas oils are typically mixtures of triglycerides all of which have low melting points and therefore contain no crystalline fat at room or ambient temperature.

Many food products contain or consist of an oil phase in which fat crystals are dispersed in order to confer some desirable physical or other property. For example, in the case of margarines and spreads, the fat crystals produce a rheology that gives good spreadability when used directly from the refrigerator or at ambient temperatures; for shortenings and other bakery fats, the crystals ensure good volume and fine crumb structure in the final product by allowing bubbles to expand during baking without rupturing; in the case of peanut butter, added crystalline fat immobilises the peanut oil and inhibits unsightly oil separation.

All of these products are commonly made commercially by adding a solid (crystalline) fat to an oil in the desired proportions, heating to melt the solid fat and thereby to produce a solution of the fat in the oil, followed by a cooling phase to crystallise the fat usually in one or more scraped surface heat exchangers of which the "Votator" product is a typical example. During cooling in the scraped surface tubes, crystallisation of the solid fat phase is initiated by the formation of relatively small numbers of crystal nuclei but neither nucleation nor crystal growth is complete by the end of the cooling process. The progressive growth of fat crystals during storage at 4°C to 10°C in to a three dimensional network increases the hardness of the fat to give a set, firm product. However, this may take weeks to reach completion and the prolonged storage of a food product as an essential element of the manufacturing process is undesirable and costly to the food industry and leads to additional cost to the consumer. Moreover, the size of the fat crystals produced under these conditions of storage or "tempering" is difficult to control and therefore it is often found in practice that shelf life is variable and that consistency of product quality is difficult to achieve.

An additional economic consideration is the fact that in scraped surface technology part of the solid fat always remains in solution in the oil phase and does not contribute positively to product functionality; the consequence is that fats can be very unstable and sensitive to temperature cycling, leading to fat crystal growth.

In addition to these limitations, it is important to realise that scraped surface technology is a re-crystallisation technology that influences only the characteristics of what is often the minor phase of a product, namely the crystalline fat. In spite of this, the oil phase, which is often the dominant phase of the food system (for example in margarines and spreads), is processed at the same time without any functional or other benefit to its properties or characteristics. However, this co-processing of oil and fat phases is necessary to obtain intimate association of the oil within the network of fat crystals and to prevent phase separation during storage.

It therefore follows that a major limitation of scraped surface technology is that much higher throughputs of triglycerides are necessary than are influenced by the process, namely only the crystalline components are affected by the cooling process, with unnecessarily high specification of the processing plant and, an increasingly important factor, unnecessarily high energy consumption.

EP-A-0 393 963 relates to a method of producing an animal feed having a powdery form in which a fat is frozen by cryogenic spray crystallisation using liquid nitrogen and the resulting fat crystals are dry mixed with, for example, whey powder. US-A-6 165 518 also relates to the manufacture of free flowing fat compositions. If desired, the product may be subjected to spray crystalisation. WO-A-98/13133 relates to the production of a granulated food or agglomerated typically comprising a fat or oil, including a cryogenic spray crystallisation step. WO-A-00/09636 relates to the production of an edible oil product comprising the steps of spray crystallising a hard oil and mixing the spray crystallised oil with a soft oil. The resultant product comprises a liquid emulsion.

The invention is concerned with a method which is universal in its application to fats or fat/oil mixtures that are to be used as ingredients in more complex food systems. For example, the method of the invention can be effectively used for fats to be used in the manufacture of shortenings and other foods containing a vegetable fat and/or animal fat and/or an interesterified fat, or in the manufacture of foods in which fat is just one of a number of phases, for example margarines, spreads (water dispersed in fat) and herb flavoured butters or margarines (a dispersion of water and particles of herb in fat).

According to the present invention there is provided A method of producing a food product formulation having plasticity or firmness comprising or containing a uniform dispersion of crystalline solid fat in an oil phase, the method comprising bringing the solid fat in molten state with or without an extraneous oil phase to a cooling device employing cryogenic spray crystallisation and therein cooling the molten fat using a cryogenic medium to effect fat crystallisation as quickly as possible and mechanically working the resulting crystalline solid fat with the rest of or all the extraneous oil phase and optionally with other ingredients so as to form the said food product formulation comprising or containing a uniform dispersion of crystalline solid fat, wherein in the event that the said food product formulation can be produced having the said uniform dispersion of crystalline solid fat without bringing any of the extraneous oil phase with the molten fat to the cooling device, then no extraneous oil phase is so brought to the cooling device with the molten fat, but in the event that such oil phase does need to be brought to the cooling device with the molten fat to allow ready dispersion of the crystalline solid fat in the food product formulation after cryogenic spray crystallisation, then only the minimum amount thereof so needed is so brought to the cooling device with the molten fat.

The solid fat may generally comprise a hydrogenated vegetable or hydrogenated tropical fat, the higher melting point fractions of tropical fats, such as coconut and palm, or butterfat or butterfat fractions or may be a mixture of one or more of these. The disperse phase may generally be any edible oil from vegetable oil to butter oil fractions.

Generally, the invention contemplates the use of the minimal amount of oil to be processed with the solid fat phase using the method of the invention to allow ready dispersion of the solid fat phase in the complete formulation after cryogenic processing, ie fat crystallisation. For some unhydrogenated hard fats, for example palm stearin, no addition of oil is necessary prior to processing by the method of the invention - such is the ease of dispersion of its crystals when added to oil. For other hard fats, such as some hydrogenated oils, the total oil content of the cryogenically processed solid fat is advantageously 35%, or more preferably 40% (by volume).

If the solid fat content of the fat is very high and difficult to disperse in an oil, the solid fat component may be processed with a minimal amount of the oil phase, for example 5% to 10% (by volume) of the total oil phase, but this has been found to depend on the chemical composition and crystal habit of the fat in question. Thus, whereas it has been found that partially hydrogenated rapeseed oil with a solid fat content of more than 90% (by volume) at 20°C required the addition of some oil before cryogenic spray crystallisation for it subsequently to be dispersible in an oil phase (Example 1), palm stearin with a similar solid fat content could be dispersed in oil after re-crystallisation without any such prior addition of oil.

Alternatively, in some applications, the cryogenically re-crystallised solid fat component (such as hydrogenated rapeseed oil) may be added to an oil phase indirectly. For example, re-crystallised solid fat and oil may be added separately to a complex mixture of ingredients, for example doughs and batters, without loss of fat functionality so that solid fat and oil interact only during the mixing process (see Examples 4 and 5). In such cases there is no need to form a shortening by combining fat and oil components.

In accordance with aspects of the invention, the crystallisation of fat using a cryogen is followed by the return of the fat or fat/oil mixture to ambient temperature from that of the cooling medium and is then mixed and/or blended with the remainder of the oil phase (or other food ingredients) to complete the final composition of the product. In the method of the invention, this mixing and/or blending may be achieved at a temperature selected to give the desired solid fat content in the product by a number of methods, all of which produce a uniform dispersion of the fat crystals in the oil phase. For example, in the manufacture of shortenings and margarines it has been found that gentle mixing of the solid fat with the added oil (and other ingredients) followed by passage through a pin-worker or an extruder (at any chosen temperature) produces a continuous stream of product that is similar in appearance and mechanical properties to that produced by scraped surface technology after some days of storage.

Cryogenic re-crystallisation of hard fats produces fat crystals that are smaller than can be achieved using other commercially employed technologies such as scraped surface technology. Such crystals have enhanced functionality in foods such as baked products such that they can be used in smaller amounts than conventionally produced fats without loss of "mouthfeel" or appearance. The addition of oil to these fats to produce a dispersion of fat crystals in the oil phase in accordance with the invention does not subsequently have an adverse effect on the enhanced functionality of the small fat crystals, unless of course the temperature is allowed to rise above the melting point of the crystalline fat. Thus, using a plastic shortening produced from cryogenically re-crystallised hard fat in accordance with the invention, it has been found possible to prepare laminated pastry with at least 20% (by volume) less fat than in conventional products and without loss of quality criteria.

### EXAMPLE 1

A biscuit shortening comprising one part partially hydrogenated rapeseed oil (iodine value 53.9) as the disperse phase and 3 parts rapeseed oil as the continuous phase was prepared in a Schröder scraped surface heat exchanger to give a final solid fat content at 20°C of 21% (by volume). This was the control sample. Its firmness (maximum force for penetration) was measured using cone penetrometry (60 degree cone angle, 20mm penetration, drive speed 10mm/min) at 20°C. Six samples were tested.

A shortening of identical ingredient composition was prepared by melting the hydrogenated rapeseed oil, adding to it 10% ^{v}/ᵥ of the rapeseed oil ingredient and then re-crystallising the mixture by spraying it in to a field of liquid nitrogen. The resulting frozen powder was allowed to return to ambient temperature and the remainder of the rapeseed oil added to it and the whole stirred gently for 5 minutes before passing through a pin-worker maintained at 20°C. The shortening that emerged (solid fat content 24.5%) was similar in appearance to the scraped surface control and its firmness was then measured as described above. The results are shown in Table I below.

**TABLE I The firmness (mean force (g)) of shortenings prepared by conventional and cryogenic processing.**

| | **Scraped Surface Control** | **Cryogenically Processed** |
|---|---|---|
| **Mean Firmness** **(grams force)** | 305 | 360 |
| **Standard Deviation** | 22.4 | 25.8 |

### EXAMPLE 2

A shortening comprising one part partially hydrogenated rapeseed oil (iodine value 72.9) as the disperse phase and 2.5 parts rapeseed oil as the continuous phase was prepared in a scraped surface heat exchanger and mechanically tested as described above in Example 1. Its solid fat content was 15.5% (by volume) at 20°C.

A shortening of identical composition was prepared by melting the partially hydrogenated rapeseed oil and then re-crystallising it by spraying in to a field of liquid nitrogen. The resulting frozen powder was returned to ambient temperature and the rapeseed oil component of the shortening added to it and stirred slowly for 5 minutes before passing it through a screw-fed pin-worker maintained at 20°C. The resulting shortening (solid fat content 19% (by volume)) was similar to the control in appearance and its firmness measured as described above in Example 1. The results are shown in Table II below.

**TABLE II The firmness (mean force (g)) of shortenings prepared by a conventional scrape surface method and cryogenic processing.**

| | **Scraped Surface Control** | **Cryogenically Processed** |
|---|---|---|
| **Mean Firmness** **(grams force)** | 230 | 291 |
| **Standard Deviation** | 15.7 | 19.1 |

In both Examples I and II, the firmness of the cryogenically processed fat could be adjusted more closely to match that produced by scraped surface technology simply by adding an appropriate amount of oil to the formulation immediately prior to cryogenic re-crystallisation of the solid phase.

Furthermore, it has been found that dispersion by mechanical means of the crystals of a cryogenically re-crystallised hydrogenated solid fat in an oil phase is typically successful provided that the cryogenically re-crystallised solid fat contains an oil phase that represents at least 35% to 40% (by volume) of the re-crystallised fat.

It should be noted that with unhydrogenated fats such as palm stearin the amount of oil in the hard fat start material can be as low as, for example 5% to 8% (by volume), such is the ease of dispersion of its crystals when the remaining oil is added.

### EXAMPLE 3

Margarines are prepared commercially by passing all of the ingredients including fat and aqueous phases, through a scraped surface heat exchanger followed by a period of storage to allow fat crystallisation to be completed. In the method of the invention, it is also possible to make a margarine by taking the solid fat component, together with a minimal amount of the oil phase, cryogenically re-crystallising it and then combining it with an emulsion of the aqueous phase dispersed in the remainder of the oil phase or by adding the oil and aqueous phases sequentially.

Cryogenically re-crystallised, partially hydrogenated rapeseed oil (iodine value 72.9) containing 0.5% (by volume) of a commercial distilled monoglyceride was brought to room temperature. To one part of this powder was added to two parts of a water-in-oil emulsion of the following composition; the aqueous phase composition was similar to that used in many commercially produced margarines.

| | |
|---|---|
| rapeseed oil | 50.0% |
| water | 46.5% |
| reconstituted buttermilk | 2.0% |
| salt | 1.4% |
| potassium sorbate | 0.4% |
| lactic acid | 0.4% |
| flavour and colour | 0.3% |

They were then thoroughly mixed together by passage through a screw-fed pin-worker to produce a plastic product similar in appearance and hardness to margarine of the same composition produced by scraped surface technology (see below). Alternatively, it has been found that if the fat powder is added to the same proportions of rapeseed oil and aqueous phase and thoroughly mixed, a margarine is produced that is similar to that prepared by addition of an emulsion to the fat powder. These water-in-oil emulsions (margarines) were found to be stable for several weeks when stored at refrigeration temperature with little or no evidence of phase separation. The results are shown in Table III.

**TABLE III A comparison of the firmness of a margarine produced by scraped surface technology with one made using cryogenically re-crystallised fat to which other ingredients have been added by mixing.**

| | **Scraped Surface Control** | **Cryogenically Processed** |
|---|---|---|
| **Mean Firmness** **(grams force)** | 210 | 232 |
| **Standard Deviation** | 19.9 | 14.2 |

### EXAMPLE 4

Partially hydrogenated rapeseed oil (iodine value 71.5, solid fat content 54.2% (by volume) at 20°C) was melted and re-crystallised cryogenically by spraying in to a field of liquid nitrogen. The resulting frozen powder was returned to ambient temperature and used with other ingredients to make a sweet biscuit dough according to the following formulation.

| | |
|---|---|
| 250g | self raising flour |
| 125g | castor sugar |
| 80g | rapeseed oil |
| 45g | fat powder (partially hydrogenated rapeseed oil) |
| 15g | milk |
| 0.1g | vanilla essence |

The amount of oil in this formulation represented the amount necessary to reduce the solid fat content of the solid fat component to about 20% (by volume) at 20°C. The solid fat powder was blended with the sugar and the oil added subsequently to produce a cream. The remainder of the ingredients were then added and blended with the fat/sugar mixture to produce a dough that was machined, cut out and baked.

The resulting biscuits were allowed to cool and measurements made of their diameter and specific volume.

Biscuits of the same formulation were also made using a) a shortening prepared by adding the re-crystallised solid fat to the oil and mixing until they formed a homogeneous solid and b) a shortening of the same composition and materials as a) but which had been melted and re-crystallised using the cryogenic spray crystallisation method described above.

The results obtained are shown in Table IV.

**TABLE IV Characteristics of biscuits prepared from 3 fats of identical composition but in which the crystalline and oil components were mixed in different ways. Shortening 1 prepared by blending cryogenically re-crystallised fat with oil. Shortening 2 prepared by melting shortening 1 followed by cryogenic re-crystallisation.**

| **n=100** | **Solid Fat + Oil** **Added Separately** **To Dough** | **Shortening 1** | **Shortening 2** |
|---|---|---|---|
| **Mean Specific** **Volume** **(g/mm³) ±SD*** | 0.71±0.03 | 0.74±0.04 | 0.73±0.04 |
| **Mean Diameter** **(mm) ±SD** | 83±2 | 84±3 | 84±2 |

| | | | |
|---|---|---|---|
| * Standard Deviation | | | |

These results show that, irrespective of the way in which the crystalline and oil components of the fats were presented to the other ingredients of the biscuit doughs, fat functionality was unaffected and similar results were obtained in all of the final products.

### EXAMPLE 5

Partially hydrogenated rapeseed oil (iodine value 71.5, solid fat content 54.2% (by volume) at 20°C) was melted and re-crystallised cryogenically by spraying in to a field of liquid nitrogen. The resulting frozen powder was returned to ambient temperature and used, with other ingredients, to make bread in batches of 10 loaves, each batch testing the baking performance of a different fat blend. A modification of the Chorleywood Baking Process was used and the bread formulation of each batch was as follows:

| | |
|---|---|
| 4,500 g | hard white flour |
| 140 g | fat |
| 120 g | fresh, compressed yeast |
| 50 g | salt |
| 10 g | sugar |
| 2,650 g | water |

The fats used comprised one of a) the re-crystallised fat powder, to which sufficient rapeseed oil had been added to reduce the solid fat content to 30% (by volume) at 20°C and mixed until it produced a homogeneous solid (shortening), b) the same fat as in a) that had been melted and re-crystallised using the cryogenic spray crystallisation method described above to produce a powdered shortening, c) the same fat powder and oil components used in a) and b) but added separately to the other dough ingredients in the mixer, or d) a control shortening in which the cryogenically re-crystallised fat powder and oil mixture referred to in b) had been melted and processed through a scraped surface heat exchanger. This experiment was designed to establish whether the way in which cryogenically re-crystallised fat (crystals) was presented to the other dough components affected loaf quality.

The ingredients were mixed according to the short time, high energy method using a "Tweedy" 10 mixer (10Whkg⁻¹). The loaves were moulded and proofed for a total of 2 hours at 40°C (1 hour proof, knock down followed by a second proof of 1 hour) using a relative humidity of 80%. Baking was at 215°C for 30 minutes after which loaves were cooled overnight at ambient temperature before they were assessed and measurements made. Loaf volume was measured using seed displacement and an average value of 10 loaves per batch calculated. Texture score was conducted by expert assessment on a scale of 0 (very bad) to 6 (excellent/ exhibition). The results are shown in Table V below.

**TABLE V Characteristics of loaves prepared from 4 fats of identical triglyceride composition but in which the crystalline and oil components were mixed in different ways. Shortening 1 prepared by blending cryogenically re-crystallised fat with oil. Shortening 2 prepared by melting shortening 1 followed by cryogenic re-crystallisation. Control shortening prepared by scraped surface processing.**

| | **Shortening 1** | **Shortening 2** | **Solid Fat + Oil** **Added Separately** **To Dough** | **Control** **Shortening** |
|---|---|---|---|---|
| **Average Loaf** **Volume (ml)** | 1,525 ±10 | 1,532 ±11 | 1,555 ±16 | 1,475 ±21 |
| **Average Crumb** **Texture Score** | 4.5 ±0.1 | 4.5 ±0.1 | 4.2 ±0.2 | 3.7 ±0.1 |

These results show that, irrespective of the way in which the crystalline and oil components of the fats were presented to the other ingredients of the bread doughs, fat functionality was unaffected and similar results were obtained in all of the final products containing cryogenically re-crystallised fat. In particular, re-crystallised fat and oil components added separately to doughs performed as well as reconstituted shortenings in which there was a fine dispersion of fat crystals in the oil phase. As expected, the bread containing fat processed conventionally, by scraped surface technology, had smaller volumes and lower crumb texture scores.

### EXAMPLE 6

Laminated pastry, used in such products as vol au vent cases, croissants and puff pastries, contains a relatively large amount of fat, which may be a vegetable shortening (or margarine based or vegetable oils) or butter. For best results, the proportion of fat is as high as 100% (by volume) of the flour weight or between 35% and 40% (by volume) of the total paste. It is widely known that significant reductions of these levels produce pastries with poor lift in the oven and with unacceptable shrinkage after cooling.

The vegetable shortenings or margarines used in these products usually consist of or contain a solid fat phase of partially or completely hydrogenated vegetable fat dispersed in a vegetable oil. It is common commercial practice to produce these fat blends using machines of the "Perfector" or "Votator" type.

However, it has been found that when the performance of commercial vegetable shortenings, or margarines containing or consisting of a hydrogenated fat, in laminated pastry is compared with fat of the same chemical composition that has been prepared by the method of the invention, namely by cryogenically re-crystallising hard fat, and later blending with oil to adjust the solid fat content, the functionality of the pastry fat prepared from cryogenically re-crystallised fat is so improved that reductions of up to 35% (by volume) in the fat level results in products that are similar in appearance and mouthfeel to those containing normal amounts of the commercially prepared fat. Details of some typical results that have been obtained are given in Tables VI and VII. It is believed that such reductions of fat content in laminated pastry products, without loss of product quality, have not been achieved before using alternative approaches or technologies.

This increase in functionality of cryogenically re-crystallised fat is attributed to the significant reduction in fat crystal size, the corresponding increase in fat crystal numbers, as well as the increase in solid fat content of the hydrogenated vegetable fat component of the shortening or margarine. Indeed, the increase in solid fat content of flaky pastry shortenings containing a hydrogenated fat, after processing by the method of the invention, may be such that the fat firmness also increases significantly and the rheological properties of the fat may no longer be suitable for even lamination. It is a considerable benefit of the method of the invention in this application that in such cases the shortening may be re-formulated to increase the proportion of oil (with a corresponding decrease in the proportion of hydrogenated fat) such that when re-crystallised using the method of the invention, the rheological properties of the fat fall within limits that permit lamination to be carried out. In this way, the level of saturated, hydrogenated fat in the formulation can be reduced, with concomitant cost benefits to the producer and nutritional benefits to the consumer.

The composition of laminated pastry used in tests is as follows. Each control and experimental pastry was prepared in 100kg batches using a commercial laminating machine and baked in commercial ovens.

| Ingredient | % On Flour Weight | % Of Total |
|---|---|---|
| Flour | 100 | 43.33 |
| Water | 55 | 23.83 |
| Vegetable shortening | 75 | 32.50 |
| Salt | 0.8 | 0.34 |

**TABLE VI Composition and properties of commercial vegetable shortenings used to prepare laminated (puff) pastry to include their Solid Fat Index (SFI) and Fat Firmness.**

| **Fat Blend** | | **SFI (%) at 20°C** | **Fat Firmness (g/cm²)** |
|---|---|---|---|
| **A** | Hydrogenated Palm Oil + Rapeseed Oil | 37 | 380 |
| **B** | Partially Hydrogenated Soya Bean Oil + Soya Oil | 42 | 410 |
| **C** | Hydrogenated Rapeseed Oil + Palm Oil + Rapeseed Oil | 43 | 450 |

**TABLE VII Effect of the three commercial vegetable shortenings (Commercial A, B and C) of Table VI, prepared using scraped surface technology, and of shortenings of the same chemical composition but re-crystallised and blended with oil according to the method of the invention (Re-crystallised A, B and C), on some of the characteristics of laminated (puff) pastry.**

| **Fat Blend** | **Level of Fat Used** (% Of Normal Fat Content) | **Height Of Pastry** (mm) | **Palate Cling** |
|---|---|---|---|
| **Commercial A** | 100% | 2.95 | Moderate |
| **Commercial A** | 70% | 1.52 | Moderate |
| **Re-crystallised A** | 70% | 3.05 | Slight |
| **Commercial B** | 100% | 3.77 | Moderate |
| **Commercial B** | 70% | 1.82 | Moderate |
| **Re-crystallised B** | 70% | 3.65 | Slight |
| **Commercial C** | 100% | 3.55 | Slight |
| **Commercial C** | 70% | 1.88 | Moderate |
| **Re-crystallised C** | 70% | 3.40 | Slight |

The results shown in Table VII show that, as expected, reducing the level of fat to 70% of the normal value results in a significant loss of pastry lift. However, such is the baking performance of fats of the same chemical composition prepared by the method of the invention that using the same low fat levels produces pastry lift and "mouthfeel" equivalent to the higher levels of conventional fat produced by scraped surface technology.

## Claims

1. A method of producing a food product formulation having plasticity or firmness comprising or containing a uniform dispersion of crystalline solid fat in an oil phase, the method comprising bringing the solid fat in molten state with or without an extraneous oil phase to a cooling device employing cryogenic spray crystallisation and therein cooling the molten fat using a cryogenic medium to effect fat crystallisation as quickly as possible and mechanically working the resulting crystalline solid fat with the rest of or all the extraneous oil phase and optionally with other ingredients so as to form the said food product formulation comprising or containing a uniform dispersion of crystalline solid fat, wherein in the event that the said food product formulation can be produced having the said uniform dispersion of crystalline solid fat without bringing any of the extraneous oil phase with the molten fat to the cooling device, then no extraneous oil phase is so brought to the cooling device with the molten fat, but in the event that such oil phase does need to be brought to the cooling device with the molten fat to allow ready dispersion of the crystalline solid fat in the food product formulation after cryogenic spray crystallisation, then only the minimum amount thereof so needed is so brought to the cooling device with the molten fat.

2. A method according to Claim 1, in which the solid fat is an unhydrogenated hard fat.

3. A method according to Claim 2, in which no extraneous oil is added to the unhydrogenated hard fat that is subjected to cryogenic spray crystallisation.

4. A method according to Claim 3, in which the unhydrogenated hard fat is palm stearin.

5. A method according to Claim 1, in which the solid fat is a hydrogenated vegetable or hydrogenated tropical fat.

6. A method according to any preceding claim in which the amount of oil in the food product formulation is at least 35% (by volume) of the solid fat.

7. A method according to Claim 4 in which the amount of oil in the food product formulation is at least 40% (by volume) of the solid fat.

## Patentansprüche

1. Verfahren zur Herstellung einer Nahrungsmittelprodukt-Formulierung mit Plastizität oder Festigkeit, welche eine gleichmäßige Dispersion von kristallinem, festem Fett in einer Ölphase umfasst oder enthält, wobei das Verfahren folgendes umfasst: Zuführen des festen Fetts in geschmolzenem Zustand mit oder ohne eine fremde Ölphase zu einer Kühleinheit, die kryogene Sprühkristallisation einsetzt, und darin Kühlen des geschmolzenen Fetts unter Verwendung eines kryogenen Mediums, um Fettkristallisation so schnell wie möglich zu bewirken, und mechanische Verarbeitung des so erhaltenen kristallinen, festen Fetts mit dem Rest der oder der gesamten fremden Ölphase und gegebenenfalls mit anderen Bestandteilen, um die Nahrungsmittelprodukt-Formulierung zu bilden, die eine gleichmäßige Dispersion von kristallinem, festem Fett umfasst oder enthält, wobei in dem Fall, dass die Nahrungsmittelprodukt-Formulierung so hergestellt werden kann, dass sie die gleichmäßige Dispersion von kristallinem, festem Fett aufweist, ohne dass etwas von der fremden Ölphase mit dem geschmolzenen Fett zu der Kühleinheit zugeführt wird, keine fremde Ölphase zu der Kühleinheit mit dem geschmolzenen Fett zugeführt wird, jedoch in dem Fall, dass eine solche Ölphase zu der Kühleinheit mit dem geschmolzenen Fett zugeführt werden muss, um eine einfache Dispergierung des kristallinen, festen Fetts in der Nahrungsmittelprodukt-Formulierung nach der kryogenen Sprühkristallisation zu ermöglichen, nur die kleinstmögliche so benötigte Menge davon zu der Kühleinheit mit dem geschmolzenen Fett zugeführt wird.

2. Verfahren gemäß Anspruch 1, wobei das feste Fett ein nichthydriertes, hartes Fett ist.

3. Verfahren gemäß Anspruch 2, wobei kein fremdes Öl zu dem nichthydrierten, harten Fett, welches einer kryogenen Sprühkristallisation unterworfen wird, zugegeben wird.

4. Verfahren gemäß Anspruch 3, wobei das nichthydrierte, harte Fett Palmstearin ist.

5. Verfahren gemäß Anspruch 1, wobei das feste Fett ein hydriertes Pflanzenfett oder hydriertes Tropenfett ist.

6. Verfahren gemäß einem der vorstehenden Ansprüche, wobei die Menge an Öl in der Nahrungsmittelprodukt-Formulierung wenigstens 35 % (Vol.) des festen Fetts beträgt.

7. Verfahren gemäß Anspruch 4, wobei die Menge an Öl in der Nahrungsmittelprodukt-Formulierung wenigstens 40 % (Vol.) des festen Fetts beträgt.

## Revendications

1. Méthode de production d'une formulation de produit alimentaire ayant une plasticité ou une fermeté, comprenant ou contenant une dispersion uniforme de graisse solide cristalline dans une phase huile, la méthode consistant à amener la graisse solide à l'état fondu avec ou sans une phase huile étrangère à un dispositif de refroidissement mettant en oeuvre la cristallisation par pulvérisation cryogénique et refroidir la graisse fondue dans celui-ci en utilisant un milieu cryogénique pour réaliser la cristallisation de graisse aussi rapidement que possible et malaxer mécaniquement la graisse solide cristalline résultante avec le reste ou l'ensemble de la phase huile étrangère et éventuellement avec d'autres ingrédients de manière à former ladite formulation de produit alimentaire comprenant ou contenant une dispersion uniforme de graisse solide cristalline, où dans le cas où ladite formulation de produit alimentaire peut être produite ayant ladite dispersion uniforme de graisse solide cristalline sans amener une phase huile étrangère quelconque avec la graisse fondue au dispositif de refroidissement, alors aucune phase huile étrangère n'est ainsi amenée au dispositif de refroidissement avec la graisse fondue, mais dans le cas où il est nécessaire d'amener une telle phase huile au dispositif de refroidissement avec la graisse fondue pour permettre une dispersion facile de la graisse solide cristalline dans la formulation de produit alimentaire après cristallisation par pulvérisation cryogénique, alors seulement la quantité minimale de celle-ci ainsi nécessaire est ainsi amenée au dispositif de refroidissement avec la graisse fondue.

2. Méthode selon la revendication 1, **caractérisée en ce que** la graisse solide est une graisse dure non hydrogénée.

3. Méthode selon la revendication 2, **caractérisée en ce qu'**aucune huile étrangère n'est ajoutée à la graisse dure non hydrogénée qui est soumise à la cristallisation par pulvérisation cryogénique.

4. Méthode selon la revendication 3, **caractérisée en ce que** la graisse dure non hydrogénée est la stéarine de palme.

5. Méthode selon la revendication 1, **caractérisée en ce que** la graisse solide est une graisse végétale hydrogénée ou une graisse tropicale hydrogénée.

6. Méthode selon l'une quelconque des revendications précédentes, **caractérisée en ce que** la quantité d'huile dans la formulation de produit alimentaire est d'au moins 35 % (en volume) de la graisse solide.

7. Méthode selon la revendication 4, **caractérisée en ce que** la quantité d'huile dans la formulation de produit alimentaire est d'au moins 40 % (en volume) de la graisse solide.
